# EUROPÄISCHE PATENTSCHRIFT

(11) **EP 3 650 115 B1**
(45) Veröffentlichungstag und Bekanntmachung des Hinweises auf die Patenterteilung: **09.09.2020**
(21) Anmeldenummer: 18205787.7
(22) Anmeldetag: 12.11.2018
(51) Int. Cl.: B01J 4/00, B01J 19/00

(54) **REAKTOR FÜR EINE CHEMISCHE REAKTION UND VERFAHREN ZUM REGELN DER CHEMISCHEN REAKTION**
REACTOR FOR A CHEMICAL REACTION AND METHOD FOR CONTROLLING THE CHEMICAL REACTION
RÉACTEUR POUR UNE RÉACTION CHIMIQUE ET PROCÉDÉ DE RÉGULATION DE LA RÉACTION CHIMIQUE

(43) Veröffentlichungstag der Anmeldung: 13.05.2020
(73) Patentinhaber: HEION GmbH, 23623 Siblin (DE)
(72) Erfinder: LEDWON, Anton, 53842 Troisdorf (DE); LEWTSCHENKO, Waldemar, 53773 Hennef (DE)
(74) Vertreter: Wagner Albiger & Partner Patentanwälte mbB

(56) Entgegenhaltungen:
- EP-A1- 3 266 744
- DE-A1-102016 109 639
- US-A1- 2007 212 294

## Beschreibung

### Beschreibung

Die Erfindung betrifft einen Reaktor für eine chemische Reaktion sowie ein Verfahren zum Regeln der chemischen Reaktion.

Aus der DE 10 2016 109 639 A1 ist ein Reaktor mit einem Reaktionsraum und einem Gehäuse bekannt, das den Reaktionsraum umschließt. Über ein Düsenelement wird ein erstes Edukt in den Reaktionsraum geführt. Ein weiteres Düsenelement leitet ein zweites Edukt in den Reaktionsraum, wobei die beiden Edukte mit hoher kinetischer Energie aufeinanderprallen. Die kinetische Energie wird dabei gemäß der DE 10 2016 109 639 A1 zur atomaren oder molekularen Umstrukturierung wenigstens einer der beiden Edukte genutzt. Bei den Edukten kann es sich um Wasser und einem flüssigen Kohlenwasserstoff wie beispielsweise Dieselkraftstoff handeln. Ein angestrebtes Produkt der in dem Reaktionsraum stattfindenden chemischen Reaktion, also der atomaren oder molekularen Umstrukturierung wenigstens einer der Edukte, ist ein modifizierter Dieselkraftstoff, mit dem eine besonders schadstoffarme Verbrennung möglich ist. Insbesondere für den Einsatz in Verbrennungsmotoren besteht ein großer Bedarf an derartigen Kraftstoffen, da die Emissionsgrenzwerte für Kraftfahrzeuge immer schärfer werden. US2007/212294 offenbart einen Reaktor mit einem vibrierenden Düsenelement.

Die atomare oder molekulare Umstrukturierung ist in der Regel mit einem Energieeintrag bzw. mit einem Verlust an chemisch gebundener Energie verbunden, sodass beispielsweise die oben erwähnte chemische Reaktion von Wasser und Dieselkraftstoff zur Erzeugung eines modifizierten Dieselkraftstoffs mit verbesserten Eigenschaften zu hohen Herstellkosten bzw. zu einer ungünstigen Ökobilanz für den modifizierten Dieselkraftstoff führen kann. Insbesondere wenn die chemische Reaktion nur eine geringe Ausbeute hat, kann es sein, dass die Vorteile des modifizierten Dieselkraftstoffs den erhöhten

Aufwand bei seiner Herstellung nicht rechtfertigen. US2007/212294 offenbart einen Reaktor mit einem vibrierenden Düsenelement.

Es ist daher Aufgabe der Erfindung, einen Reaktor bereit zu stellen, in dem chemische Reaktionen mit hoher Ausbeute bei geringem Energieaufwand ermöglicht werden.

Die der Erfindung zu Grunde liegende Aufgabe wird mit der Merkmalskombination gemäß Anspruch 1 gelöst. Ausführungsbeispiele der Erfindung können den Unteransprüchen zu Anspruch 1 entnommen werden.

Das Düsenelement des erfindungsgemäßen Reaktors weist einen Einlass zum Einströmen wenigstens eines Edukts in den Reaktionsraum des Reaktors auf, wobei das Düsenelement relativ zum Gehäuse des Reaktors beweglich gelagert ist. Der Reaktor umfasst eine Sensorvorrichtung, durch die wenigstens eine Messgröße während der im Reaktionsraum des Reaktors stattfindenden chemischen Reaktionen erfasst werden kann. Über eine Stellvorrichtung lässt sich wenigstens ein Lagerungsparameter einstellen. Mit Hilfe des Lagerungsparameters und möglicherweise mit Hilfe weiterer Lagerungsparameter lässt sich die Art und Weise beschreiben, wie das Düsenelement gelagert ist. Davon ist dann abhängig, wie sich das Düsenelement relativ zum Gehäuse bewegen kann und welche Bewegung bzw. Bewegungsform sich bei der chemischen Reaktion einstellt. Die Bewegung des Düsenelements kann durch die chemische Reaktion oder durch Prozessparameter wie Drücke, Temperaturen, Strömungsgeschwindigkeiten angeregt bzw. beeinflusst werden.

Des Weiteren umfasst der erfindungsgemäße Reaktor eine Kontrolleinheit, die ausgebildet ist, ein Messsignal der Sensorvorrichtung, welches auf der erfassten Messgröße basiert, von der Sensorvorrichtung zu empfangen. Die Kontrolleinheit kann dann in Abhängigkeit des Messsignals ein Steuerungssignal für die Stellvorrichtung erzeugen. Somit ist es möglich, in Abhängigkeit der von der Sensorvorrichtung erfassten Messgröße den wenigstens einen Lagerungsparameter über die Stellvorrichtung einzustellen.

Die Kontrolleinheit kann einen Prozessor umfassen, in dem die Funktion zwischen dem eingehenden Messsignal und dem ausgehenden Steuerungssignal in einem Speicher abgelegt ist. Das ausgehende Steuerungssignal kann dabei von weiteren Einflussgrößen abhängig sein, die während der chemischen Reaktion erfasst und als weitere Einflusssignale der Kontrolleinheit zugeführt werden.

Erfindungsgemäß weist die Sensorvorrichtung einen Sensor zur Erfassung einer Frequenz auf, mit der das Düsenelement schwingt. Der Sensor zur Erfassung der Frequenz, der beispielsweise als Schallsensor ausgebildet sein kann, sendet dann ein mit der erfassten Frequenz korrespondierendes Messsignal an die Kontrolleinheit, die auf Basis dieses Messsignals ein Steuerungssignal vorgibt oder errechnet und dieses an die Stellvorrichtung sendet. Entsprechend dem Steuerungssignal wird über die Stellvorrichtung der Lagerungsparameter neu eingestellt, was die Bewegung des Düsenelements, in diesem Ausführungsbeispiel die Frequenz, beeinflusst.

Es hat sich überraschend gezeigt, dass durch das Einstellen der Frequenz die Ausbeute bzw. der Wirkungsgrad der chemischen Reaktion optimiert werden kann. Auch hat sich gezeigt, dass durch das Einstellen der Frequenz, mit der das Düsenelement schwingt, auch der Verlauf der chemischen Reaktion derart beeinflusst werden kann, dass unterschiedliche Produkte entstehen.

In einem Ausführungsbeispiel sind ein erster Anschlag und ein zweiter Anschlag für das Düsenelement vorgesehen, zwischen denen sich das Düsenelement bewegen kann. Dabei stellt ein Abstand zwischen dem ersten Anschlag und dem zweiten Anschlag den einstellbaren Lagerungsparameter dar. Durch den Abstand zwischen den beiden Anschlägen für das Düsenelement lässt sich die Schwingungsamplitude des sich zwischen dem ersten Anschlag und dem zweiten Anschlag hin- und herbewegenden Düsenelements einstellen, was Einfluss auf dessen Frequenz hat.

Vorzugsweise ist nur einer der beiden Anschläge als bewegbarer Anschlag ausgebildet, während der andere Anschlag ortsfest ist und sich nicht bewegen lässt. Ein bewegbares Stellglied als Teil der Stellvorrichtung kann diesen bewegbaren Anschlag umfassen. In einem Ausführungsbeispiel ist das Stellglied ein Gewindeelement, dessen axiale Position durch Drehen eingestellt werden kann. Der bewegbare Anschlag wirkt dabei vorzugsweise in axialer Richtung des Gewindeelements. Ist die Steigung des Gewindes des Gewindeelements sehr klein, lässt sich die axiale Position des Gewindeelements und somit die wirksame Position des bewegbaren Anschlags sehr genau einstellen.

Der Abstand zwischen dem ersten Anschlag und dem zweiten Anschlag für das Düsenelement kann sich parallel zu einer Hauptströmungsrichtung erstrecken, mit der das Edukt durch das Düsenelement strömt. In diesem Ausführungsbeispiel bewegt sich somit das Düsenelements parallel zu dieser Hauptströmungsrichtung, nämlich entweder in Hauptströmungsrichtung oder in entgegengesetzter Richtung, also um 180° zur Hauptströmungsrichtung versetzt.

Der Abstand zwischen den Anschlägen führt zu einer spielbehafteten Lagerung des Düsenelements, wobei das Spiel der Lagerung für die notwendige Bewegungsfreiheit des Düsenelements führt. Das Spiel kann Werte von 0,01 bis 3 mm, vorzugsweise 0,2 bis 2 mm annehmen kann.

Das Düsenelement kann somit als Teil eines Schwingungssystems, umfassend eine Schwungmasse und ein Feder-Dämpfungssystem, aufgefasst werden, wobei das Feder-Dämpfungssystem durch die Art der Lagerung des Düsenelements im Gehäuse vorgegeben wird und das Schwingungsverhalten des Düsenelements beeinflusst. Beispielsweise kann eine weiche oder straffe Lagerung des Düsenelements vorgesehen sein, wobei eine Kraft, mit der das Düsenelement im Gehäuse eingespannt ist, auch als ein möglicher Lagerungsparameter angesehen werden kann, der durch die Stellvorrichtung eingestellt werden kann, um die Bewegung des Düsenelements zu beeinflussen. So kann eine Einspannkraft mittels der Stellvorrichtung variiert werden.

Das Düsenelement kann einen Auslass aufweisen, wobei ein Strömungsquerschnitt des Auslass größer ist als ein Strömungsquerschnitt des Einlasses. In einem Ausführungsbeispiel wird der Strömungsquerschnitt eines Düsenkanals (Strömungskanal zwischen Eintrifft und Austritt) ausgehend vom Einlass kontinuierlich größer. Es ist auch möglich, dass der Strömungsquerschnitt zwischen dem Einlass und dem Auslass ein Minimum (in Form einer Einschnürung, wobei der Strömungsquerschnitt dieser Einschnürung jeweils kleiner als die Strömungsquerschnitte von Einlass und Auslass ist) oder ein Maximum ausbildet.

Der Düsenkanal kann die Form eines Kegelstumpfes aufweisen. Ein Öffnungswinkel des Kegelstumpfes kann Werte zwischen 20 und 70°, 30 bis 60° oder vorzugsweise 40 bis 50° annehmen. Der Öffnungswinkel ist dabei der Winkel zwischen dem Kegelmantel und der Mittelachse des Kegelstumpfes.

Beispielsweise kann der Einlass des Düsenelements mit einem unter Druck stehenden Gemisch aus zwei Edukten beaufschlagt sein, sodass das Gemisch durch den Einlass gepresst wird und dann mit hoher Geschwindigkeit durch das Düsenelement strömt. Die Edukte können beispielsweise Wasser und ein flüssiger Kohlenwasserstoff sein.

Aufgrund des größeren Strömungsquerschnitts des Auslasses und dem dadurch einhergehenden Druckabfall kann es bei zumindest einem Edukt zur Bildung von Blasen kommen, die dann in dem Düsenelement zwischen Einlass und Auslass oder im Strömungsrichtung gesehen hinter dem Auslass des Düsenelements wieder in sich zusammenfallen (Kavitation) . Bedingt durch das sich bewegende Düsenelement kommt es insbesondere zwischen dem Einlass und dem Auslass des Düsenelements zu sich ändernden, vorzugsweise alternierenden Druckverhältnissen, wobei diese sich ändernden Druckverhältnisse erfindungsgemäß so ausgenutzt werden, dass die Phase des Implodierens der Blasen zeitlich gestreckt wird. Dabei kann zur atomaren oder molekularen Umstrukturierung des wenigstens eines Edukts die bei dem Zerfall der Blasen freigesetzte Energie gezielt genutzt werden, die ansonsten bei der Kavitation beispielsweise als Wärmeenergie ungenutzt bleibt. Das Schwingen des Düsenelements ermöglicht somit die gezielte Nutzung der bei der Kavitation freigesetzten Energie für die chemische Reaktion.

Der Reaktionsraum soll auch den Raum umfassen, der sich zwischen Einlass und Auslass innerhalb des Düsenelements befindet. Der Reaktionsraum umfasst somit auch den Düsenkanal. Ohne an diese Theorie gebunden zu sein, wird angenommen, dass ein nicht unwesentlicher Anteil der chemischen Reaktion bereits in dem Düsenkanal stattfindet, also zwischen dem Einlass und dem Auslass des Düsenelements.

Das Düsenelement kann als vorzugsweise kreisrunde Scheibe ausgebildet sein. Die Scheibe kann eine zentrale Öffnung aufweisen. In der Ebene einer ersten Grundfläche der Scheibe ist der Einlass angeordnet, in der Ebene einer gegenüberliegenden zweiten Grundfläche der Auslass. Vorzugsweise handelt es sich bei dem Düsenelement um einen im Wesentlichen rotationssymmetrischen Körper, wobei die zentrale Öffnung koaxial zur Mittelachse ausgebildet ist.

In einem Ausführungsbeispiel trennt das Düsenelement den Reaktionsraum von einer Vorkammer. Die Vorkammer dient dazu, das wenigstens eine Edukt für die chemische Reaktion oder das Gemisch aus mehreren Edukten dem Einlass des Düsenelements zuzuführen. Das Edukt bzw. das Gemisch steht in der Vorkammer dabei unter Druck und gelangt durch den Einlass des Düsenelements in den Reaktionsraum. Im Folgenden wird für das Edukt und für das Gemisch nur der Begriff "Edukt" verwendet.

Das Düsenelement dient in einem Ausführungsbeispiel nicht nur dazu, das Edukt in den Reaktionsraum zu leiten, sondern auch in dem Reaktionsraum für alternierende Druckverhältnisse zu sorgen, durch die auf den Verlauf der Kavitation (Entstehung von Gasblasen und deren Implosion) Einfluss und Kontrolle genommen wird. Die Auslegung des Düsenelements, deren Masse die Schwungmasse des oben beschriebenen Schwingungssystems darstellt, hängt somit neben der Ausgestaltung des Düsenkanals maßgeblich auch von der äußeren Formgebung des Düsenelements ab, um beispielsweise einen vorbestimmten Wert für die Masse/Schwungmasse des Düsenelements zu realisieren.

Das Düsenelement kann aus einem Material sein, dessen Dichte größer als 5 g/cm3 ist, vorzugsweise größer als 8 g/cm3. Beispielsweise kommen Eisen oder Messing als Material für das Düsenelement in Frage. Ein Verhältnis der Masse des Düsenelements (in g gemessen) zum Strömungsquerschnitt des Einlasses (in mm² gemessen) nimmt in einem Ausführungsbeispiel Werte zwischen 30 und 100, 40 bis 80 oder 50 bis 70 an. Betragen beispielsweise der Durchmesser eines kreisförmigen Strömungsquerschnitts des Einlasses 2 mm und die Masse des Düsenelements 150 g, ergibt sich daraus ein Verhältnis Masse/Strömungsquerschnitt von 48 g/mm².

Ein Verhältnis einer projizierten Gesamtfläche des Düsenelements zum Strömungsquerschnitt des Einlasses kann Werte zwischen 500 und 3000, vorzugsweise zwischen 1000 und 2000 annehmen, wobei diese Gesamtfläche die in die Ebene des Strömungsquerschnitts des Einlasses projizierte Fläche des Düsenelements entsprechen soll. Handelt es sich beispielweise bei dem Düsenelement um eine kreisrunde Scheibe mit einem Durchmesser von 80 mm, wobei der Durchmesser des kreisrunden Einlasses des Düsenelements 2 mm beträgt, ergibt sich daraus ein Verhältnis projizierte Gesamtfläche zu Strömungsquerschnitt des Einlasses von 1600 (80²/2²).

In einem Ausführungsbeispiel ist das Düsenelement über eine umlaufende Membran an dem Gehäuse befestigt. Soweit das Düsenelement als kreisrunde Scheibe ausgebildet ist, kann es sich bei der umlaufenden Membran um einen Ring handeln Die umlaufende Membran kann mit einem äußeren Bereich fest mit dem Gehäuse verbunden sein, während sie mit einem inneren Bereich fest mit dem Düsenelement verbunden ist. Aufgrund der Elastizität der Membran ist dann das Düsenelement beweglich zum Gehäuse gelagert. Die Membran kann die zusätzliche Funktion aufweisen, den Reaktionsraum gegenüber der Vorkammer abzudichten.

Die Membran kann aus einem elastischen Material sein, beispielsweise aus Gummi oder einem Elastomer. Die Anordnung von Membran, Gehäuse und Düsenelement kann so gewählt sein, dass die Membran im Ruhezustand des Reaktors unter einer gewissen mechanischen Spannung steht. Es ist möglich, während des Betriebs des Reaktors diese Spannung in Abhängigkeit der während der chemischen Reaktion erfassten Messgröße neu einzustellen bzw. zu regeln.

Der Reaktor kann ein Stellglied mit einer nadelförmigen Spitze aufweisen, die vor dem Einlass des Düsenelements angeordnet ist bzw. in den Einlass des Düsenelements hineinragt. Die Position der nadelförmigen Spitze relativ zum Einlass des Düsenelements lässt sich in einem Ausführungsbeispiel einstellen. Über diese Einstellung lässt sich die Ausbeute der chemischen Reaktion bzw. die Qualität der durch die chemische Reaktion entstehenden Produkte beeinflussen.

Das Stellglied kann einen Kanal zur Zuführung eines weiteren Edukts aufweisen. Somit kann, neben dem Edukt aus der Vorkammer, in den Düsenkanal ein weiteres Fluid (flüssig, gasförmig oder als fließfähiger Feststoff in Form von kleinen Partikeln) aus dem Stellglied eingebracht werden.

In der Nähe des Einlasses können Oberflächenstrukturen eingearbeitet sein, beispielsweise - bei dem Ausführungsbeispiel mit der kreisrunden Scheibe als Düsenelement - auf der der Vorkammer zugewandten ersten Grundfläche. In einem Ausführungsbeispiel sind diese Oberflächenstrukturen um den Einlass herum angeordnet. Dabei können die Oberflächenstrukturen in Form von radial verlaufenden Einkerbungen ausgebildet sein. Die Einkerbungen oder Rillen können auch spiralförmig um den Einlass angeordnet sein. Es hat sich gezeigt, dass durch die Oberflächenstrukturen sich die Strömungsverhältnisse (erhöhte Turbulenz) vor dem Einlass des Düsenelements derart verändern, dass die Ausbeute der chemischen Reaktion erhöht werden kann.

Eine weitere Aufgabe der Erfindung, die Bereitstellung eines Verfahrens zur Regelung einer chemischen Reaktion mit dem Ziel einer hohen Ausbeute bei möglichst geringem Energieeintrag, wird durch die Merkmalskombination gemäß Anspruch 11 gelöst. Ausführungsbeispiele des erfindungsgemäßen Verfahrens können den Unteransprüchen zu Anspruch 11 entnommen werden.

Bei dem erfindungsgemäßen Verfahren wird der oben beschriebene Reaktor eingesetzt. Bei dem erfindungsgemäßen Verfahren vollführt während der Reaktion das Düsenelement eine schwingende Bewegung, wobei wenigstens ein Schwingungsparameter der schwindenden Bewegung erfasst wird und wobei die chemische Reaktion auf Basis des erfassten Schwingungsparameters geregelt wird. In einem Ausführungsbeispiel ist der Schwingungsparameter die Frequenz der schwingenden Bewegung des Düsenelements. In einem Ausführungsbeispiel beträgt ein Sollwert für die Frequenz zwischen 16 und 20.000 Hz, 100 bis 10.000 Hz oder 1000 bis 5000 Hz. Es ist auch möglich, dass die Frequenz im Ultraschallbereich liegt, wobei hier von Frequenzen über 20.000 Hz ausgegangen wird (beispielsweise 20.000 Hz bis 100 kHz).

Das Verfahren kann vorsehen, dass die Schwingbewegung durch den oben beschriebenen ersten Anschlag für das Düsenelement und den oben beschriebenen zweiten Anschlag für das Düsenelement begrenzt wird, wobei zur Regelung der Reaktion der Abstand zwischen dem ersten Anschlag und dem zweiten Anschlag variiert bzw. eingestellt wird.

In einem Ausführungsbeispiel wird die zum Einlass des Düsenelements relative Position des nadelförmigen Körpers zur Regelung der chemischen Reaktion verändert.

Durch die erfindungsgemäße Vorrichtung bzw. durch das erfindungsgemäße Verfahren ist es möglich, bei einem flüssigen Kohlenstoffwasserstoff (wie zum Beispiel Dieselkraftstoff) Sauerstoff so an die betreffenden Kohlenstoffketten anzubinden, dass der Dieselkraftstoff oxidationsstabil bleibt. Der Sauerstoff wird als Hydroxyl oder Carboxyl an den Kohlenwasserstoff chemisch gebunden.

Bei der Verbrennung im Verbrennungsmotor fällt dieser Sauerstoff in eine tiefere Oxydationsstufe und bildet die üblichen Verbrennungsprodukte H₂O und CO₂. Das gebildete H₂O geht bei der Verbrennung im Verbrennungsmotor in die Dampfphase, wodurch zusammen mit der Freisetzung der thermischen Energie durch die Verbrennung mechanische Energie im Zylinder des Verbrennungsmotors erzeugt wird.

Durch die zusätzlichen chemisch gebundenen Sauerstoffatome verbrennt der Dieselkraftstoff emissionsarmer bei hohen Wirkungsgraden. Insbesondere lassen sich durch den derart modifizierten Dieselkraftstoff die NOₓ-Emissionen schon bei der Verbrennung reduzieren.

Ohne an diese Theorie gebunden zu sein, findet in dem erfindungsgemäßen Verfahren eine Aufspaltung der Wassermoleküle statt, bei der radikale Hydroxylionen entstehen, die mit den Kohlenwasserstoffmolekülen neue chemische Strukturen gründen. Bei der Aufspaltung der Wassermoleküle wird die Gasphase umgangen und das Reaktionsmaterial bleibt im flüssigen Zustand. Dadurch benötigt diese Reaktion relativ wenig Energieeinsatz. Es wurde festgestellt, dass direkt nach Veränderungsprozess das bearbeitete Material einen radikalen Charakter hat. Durch die weitere Behandlung werden die radikalen Strukturen in stabile Strukturen durch Oxidation gewandelt. Die Stabilisierung des radikalen chemischen Zustandes kann durch Zugabe von Sauerstoff, Wasserstoff, CO₂, Methan und weiteren Gasen und Flüssigkeiten erfolgen. Dies ermöglicht, den Dieselkraftstoff mit günstigeren Eigenschaften auszustatten. Dieses Verfahren basiert somit auf der künstlichen Radikalisierung der Edukte und Stabilisierung durch Oxidation.

Das Verfahren lässt sich auch dort einsetzen, wo Emulsionen eingesetzt werden (beispielsweise in der Kosmetik- oder Lebensmittelindustrie). Durch das Verfahren lässt sich der Einsatz von ansonsten notwendigen Zusatzstoffen wie beispielsweise Tenside reduzieren oder auch vermeiden.

Anhand der in den Figuren dargestellten Ausführungsbeispiele wird die Erfindung näher erläutert. Es zeigen:
- Figur 1: schematisch einen erfindungsgemäßen Reaktor;
- Figur 2: Teile des erfindungsgemäßen Reaktors im Längsschnitt;
- Figur 3: einen vergrößerten Ausschnitt aus der Figur 1; und
- Figur 4: die Geometrie eines Düsenkanals.

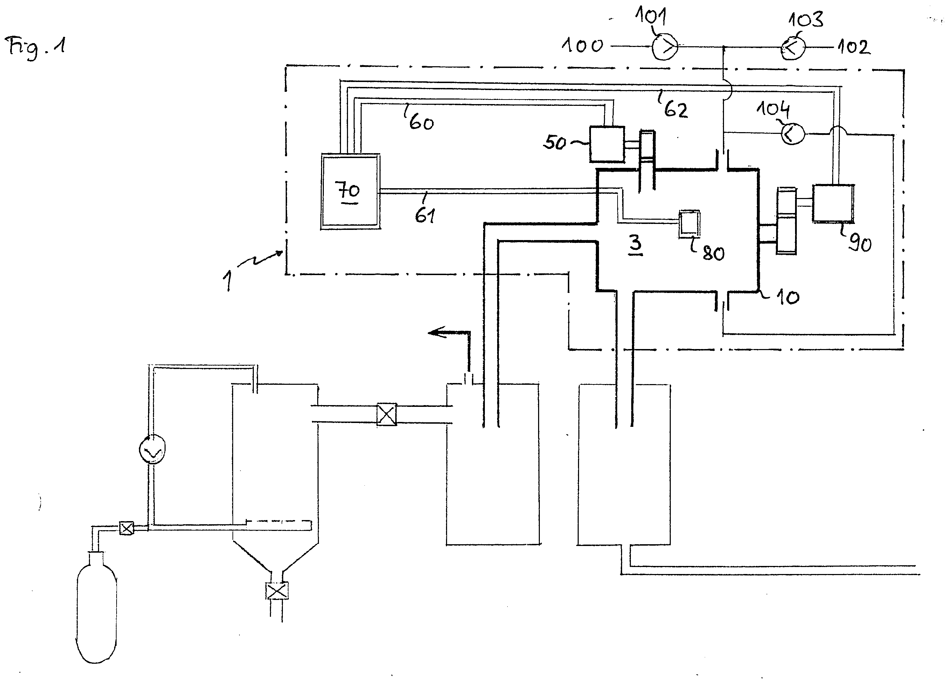

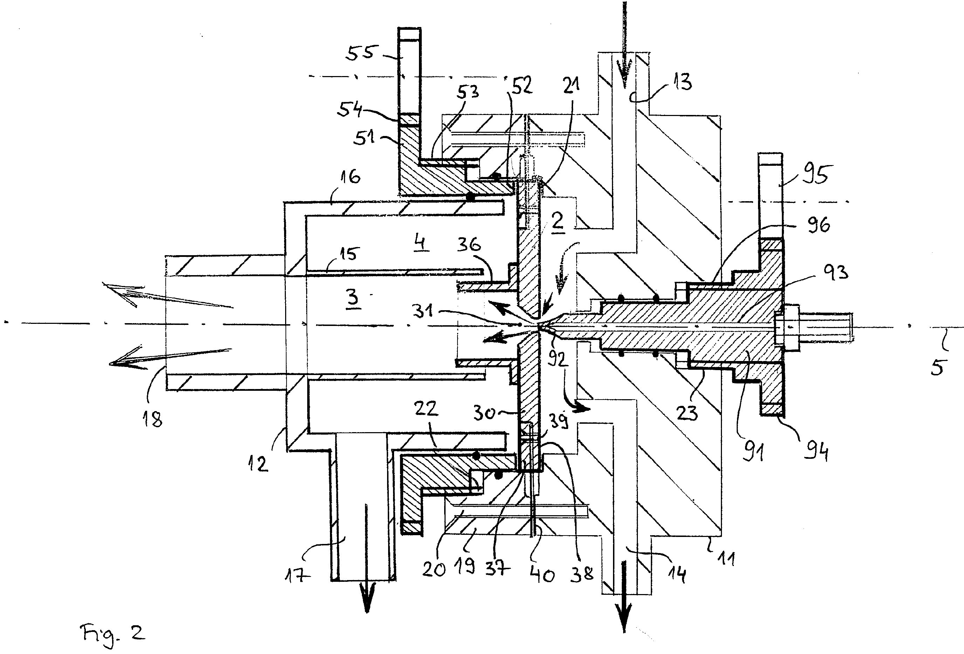

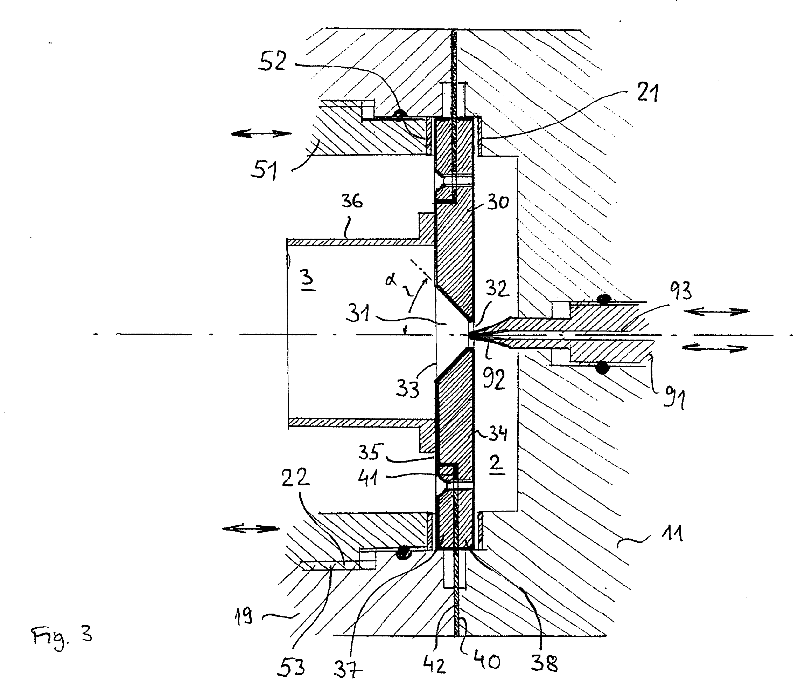

Figur 1 zeigt schematisch einen Reaktor, der in seiner Gesamtheit mit 1 bezeichnet wird. Der Reaktor 1 soll dabei die Bauteile umfassen, die innerhalb der strichpunktierten Linie liegen. Der Reaktor umfasst ein Gehäuse 10 und ein Reaktionsraum 3, das von dem Gehäuse 10 umschlossen wird. Beweglich zum Gehäuse 10 ist ein Düsenelement angeordnet. Dieses Düsenelement ist in nicht Figur 1, aber in den Figuren 2 und 3 dargestellt und wird dort mit dem Bezugszeichen 30 bezeichnet. Eine Stellvorrichtung 50 dient dazu, einen Lagerungsparameter für das beweglich gelagerte Düsenelement 30 einzustellen. Bei dem Lagerungsparameter handelt es sich in diesem Ausführungsbeispiel um ein Spiel, das für eine gewisse Bewegbarkeit des Düsenelements 30 sorgt, sodass es sich hin und her bewegen kann bzw. eine schwingende Bewegung vollführen kann.

Die Stellvorrichtung 50 ist über eine Signalleitung 60 mit einer Kontrolleinheit 70 verbunden. Eine Sensorvorrichtung 80 erfasst wenigstens eine Frequenz, mit der das Düsenelement schwingt. Die Sensorvorrichtung 80 leitet über eine Signalleitung 61 die erfasste Frequenz bzw. ein Messsignal auf Basis der erfassten Frequenz zur Kontrolleinheit 70. Auf der Basis des Messsignals der Sensorvorrichtung 80 ermittelt die Kontrolleinheit 70 ein Steuerungssignal für die Stellvorrichtung 50, welches über die Signalleitung 60 übermittelt wird. Die Kontrolleinheit 50 regelt somit die Frequenz des Düsenelements 30.

Des Weiteren umfasst der Reaktor eine zweite Stellvorrichtung 90, durch die eine axiale Position einer nadelförmigen Spitze (siehe Bezugszeichen 92 in Figuren 2 und 3) relativ zum Düsenelement 30 eingestellt werden kann. Näheres dazu kann der Figurenbeschreibung zu den Figuren 2 und 3 entnommen werden. Die Stellvorrichtung 90 steht über eine Signalleitung 62 mit der Kontrolleinheit 70 in Verbindung. Eine axiale Position der nadelförmigen Spitze kann somit auch über die Kontrolleinheit 70 eingestellt werden.

Ein erstes Edukt 100 wird über eine Pumpe 101 dem Gehäuse 10 des Reaktors 1 zugeführt. Des Weiteren pumpt eine Pumpe 103 ein zweites Edukt 102 für die im Reaktor stattfindenden chemischen Reaktion in das Gehäuse 10. Das Edukt 100 und das Edukt 101 werden außerhalb des Reaktors 1 zusammengeführt, so dass ein Gemisch aus den Edukten 100 und 101 den Reaktor 1 erreicht. Eine Pumpe 104 sorgt dafür, dass der Teil des Gemisches, der nicht an der chemischen Reaktion teilgenommen hat, im Umlauf wieder dem Gehäuse 10 zugeführt wird. Das Edukt 100 kann Wasser sein. Das Edukt 102 kann ein gewöhnlicher Dieselkraftstoff sein.

Die weiteren, außerhalb der strichpunktierten Linie dargestellten Elemente dienen der Nachbehandlung der Produkte der chemischen Reaktion bzw. dem Auffangen von Undichtigkeiten. Die Nachbehandlung ist nicht Teil der Erfindung und wird daher nicht weiter beschrieben.

Figur 2 zeigt Teile des Reaktors 1 im Längsschnitt, wobei Figur 3 einen vergrößerten Ausschnitt der Figur 3 zeigt. Figur 3 zeigt dabei nicht alle Merkmale von Figur 2 bzw. leicht modifizierte Bauteile. Das Gehäuse 10 umfasst einem ersten Gehäuseteil 11 und einem zweiten Gehäuseteil 12. In dem Gehäuse 10 ist ein Düsenelement 30 beweglich gelagert. In dem in den Figuren 2 und 3 dargestellten Ausführungsbeispiel lässt sich das Düsenelement 30 in der Zeichenebene nach links und nach rechts hin und her bewegen.

Das Düsenelement 30 ist als kreisrunde Scheibe ausgebildet, die eine zentrale Bohrung 31 aufweist. Die zentrale Bohrung 31 ist koaxial zu einer Mittelachse 5 des Reaktors 1 angeordnet. Die zentrale Bohrung 31 definiert einen Einlass 32 und einen Auslass 33 des Düsenelements 30 und kann auch als Düsenkanal berechnet werden (siehe Figur 3). Zu erkennen ist, dass ein kreisförmiger Strömungsquerschnitt des Einlasses 32 kleiner ist als ein kreisförmiger Strömungsquerschnitt des Auslasses 33. Der Strömungsquerschnitt des Auslasses 33 (in Flächeneinheiten gerechnet, unabhängig von der Form des Strömungsquerschnitts) kann um den Faktor 4 oder mehr größer sein als der Strömungsquerschnitt des Einlasses 32. Eine Hauptströmungsrichtung durch den Düsenkanal 31 erstreckt sich parallel zur Mittelachse 5.

Die Lagerung des Düsenelements 30 weist ein kleines Spiel auf, welches die Hin-und Herbewegung des Düsenelements 30 parallel zur Mittelachse 5 ermöglicht.

Der Düsenkanal 31 weist die Form eines Kegelstumpfes auf. Ein Öffnungswinkel des Kegelstumpfes, der in Figur 3 mit α bezeichnet wird, beträgt rund 45°.

Das Düsenelement 30 weist eine erste Grundfläche 34 und eine dazu beabstandete zweite Grundfläche 35 auf. Der Abstand der ersten Grundfläche 34 zur zweiten Grundfläche 35 entspricht dabei einer Dicke des Düsenelements 30. Die Dicke kann beispielsweise 1 bis 10 mm betragen

Wie Figur 2 entnommen werden kann, bildet die erste Gehäuseteil 11 einen Eintrittskanal 13 aus, durch den das Gemisch der Edukte 100 und 102 für die chemische Reaktion in eine Vorkammer 2 geleitet wird (der Eintrittskanal ist in Figur 3 nicht dargestellt). Die Vorkammer 2 wird dabei durch das erste Gehäuseteil 11 und dem Düsenelement 30 begrenzt. Durch den Einlass 32 gelangt das unter Druck stehende Gemisch aus Wasser und Dieselkraftstoff in den Düsenkanal 31, der in einen Reaktionsraum 3 mündet. Der Düsenkanal 31 soll Teil dieses Reaktionsraums 3 sein, sodass im engeren Sinne bereits in Strömungsrichtung des Gemisches gesehen, der Reaktionsraum 3 ab dem Einlass 32 des Düsenelements 30 beginnt. Der Teil des Gemisches, der nicht durch den Einlass 32 gelangt, verlässt die Vorkammer 2 durch einen Austrittsöffnung 14 und wird über die Pumpe 104 (siehe Figur 1) wieder der Vorkammer zugeführt.

Das zweite Gehäuseteil 12, welches den Reaktionsraum 3 umschließt, weist eine zylindrische Innenhülse 15 und eine dazu koaxial angeordnete Außenhülse 16 auf, wobei die Innenhülse 15 die eigentliche Umwandung des Reaktionsraums 3 bildet. Ein Ringraum 4 zwischen der Innenhülse 15 und der Außenhülse 16 dient dazu, Wasser und Dieselkraftstoff, welches durch eine nicht 100-prozentige Abdichtung der Vorkammer 2 entweichen kann, aufzufangen. Durch einen Abführkanal 17 werden aufgefangenen Undichtigkeiten aus dem Ringraum 4 abgeleitet.

Des Weiteren wird der Reaktionsraum 3 begrenzt durch einen hülsenförmigen Aufsatz 36, der koaxial auf die zweite Grundfläche 35 des Düsenelements 30 aufgesetzt ist. Der Aufsatz 36, der einen leicht verminderten Durchmesser im Vergleich zum Durchmesser der Innenhülse 15 aufweist, dient dazu, den Reaktionsraum 3 von dem Ringraum 4 noch besser abzugrenzen.

An einem dem Düsenelement 30 gegenüberliegenden Ende des im wesentlichen zylindrischen Reaktorraums 3 ist eine Austrittsöffnung 18 vorgesehen, durch den die Produkte der in dem Reaktionsraum 3 stattfindenden Reaktion aus dem Reaktor 1 austreten können.

Das Düsenelement 30 wird durch eine ringförmige Membran 40 gehalten. Ein innerer Bereich 41 der Membran 40 ist zwischen einem Befestigungsring 37 und einem in der Dicke verminderten umlaufenden Rand 38 des Düsenelements 30 eingespannt. Gewindebohrungen 39 sind zur Aufnahme von Befestigungsschrauben vorgesehen, durch die der innere Bereich 41 der Membran 40 zwischen Befestigungsring 36 und Rand 37 eingeklemmt werden kann.

Ein äußerer Bereich 42 ist zwischen dem ersten Gehäuseteil 11 und einem ringförmigen Befestigungsflansch 19 eingeklemmt. Durch Befestigungsschrauben, die sich in die Gewindebohrungen 20 schrauben lassen, lässt sich der äußere Bereich 42 der Membran zwischen erstem Gehäuseteil 11 und Befestigungsflansch 19 fixieren.

Das oben erwähnte Spiel, das für die Hin-und Herbewegung des Düsenelements 30 relativ zum Gehäuse 10 notwendig ist, wird definiert durch einen ringförmigen ersten Anschlag 21 sowie ein Stellglied 51 mit einem zweiten Anschlag 52. Die axiale Position des zweiten Anschlags 52 (parallel zur Mittelachse 5) ist aufgrund der axialen Einstellbarkeit des Stellglieds 51 variabel. Das Stellglied 51 ist Teil der Stellvorrichtung 50 und als ein Gewindeelement ausgebildet. Das Gewindeelement weist ein Außengewinde 53 auf, das mit einem Innengewinde 22 am Befestigungsflansch 19 zusammenwirkt. Das Stellglied 51 weist eine Außenverzahnung 54 auf, das mit einem Zahnrad 55 im kämmenden Eingriff steht. Wenn das Zahnrad 55 gedreht wird, wird diese Drehbewegung auf das Stellglied 51 übertragen, wobei sich aufgrund des Zusammenwirkens von Außengewinde 53 und dem Innengewinde 22 des Befestigungsflansch 19 eine axiale Verschiebung des Stellglied 51 und somit auch eine axiale Verschiebung des zweiten Anschlags 52 für das Düsenelement 30 einstellen. Mit anderen Worten lässt sich durch Drehung des Stellglied 51 das Spiel und somit die maximale Amplitude für das Düsenelement 30 einstellen.

In dem ersten Gehäuseteil 11 ist koaxial zur Mittelachse 5 ein axial bewegbares weiteres Stellglied 91 als Teil der Stellvorrichtung 90 vorgesehen, das eine bereits oben schon erwähnte nadelförmige Spitze 92 aufweist. Die nadelförmige Spitze 92 greift dabei durch den Einlass 32 und ragt somit in den Düsenkanal 31 hinein. Das Stellglied 91 weist einen Kanal 93 auf, durch den ein weiteres Edukt neben dem Gemisch, das in die Vorkammer 2 eingeleitet wird, in den Düsenkanal 31 eingebracht werden kann. Das Stellglied 91 weist eine Außenverzahnung 94 auf, die mit einem Zahnrad 95 in Eingriff steht. Ein Außengewinde 96 des Stellglieds 91 wirkt mit einem in dem ersten Gehäuseteil 11 eingearbeiteten Innengewinde 23 zusammen, so dass eine Drehung des Zahnrads 95 zu einer axialen Verschiebung des Stellglieds 91 führt. Durch Drehung des Zahnrads 95 kann somit die axiale Position der nadelförmigen Spitze 92 in Bezug auf den Düsenkanal 31 eingestellt werden.

Das Gemisch aus Wasser und Dieselkraftstoff gelangt mit hohem Druck (beispielsweise 2 bis 5 bar) in die Vorkammer 2. Das Gemisch wird dabei durch den Einlass 32 in den Düsenkanal 31 gepresst, wobei bedingt durch die in dem Düsenkanal 31 bzw. in dem Reaktionsraum 3 vorherrschenden Strömungs- und Druckverhältnisse es zur Bildung von Gasblasen kommt, die dann wieder in sich zusammenfallen (Kavitation). Durch die Strömung und Druckverhältnisse wird das Düsenelement 30 zum Schwingen angeregt, wobei sich durch das Stellglied 51 das Spiel für das Düsenelement 30 einstellen lässt. Dies hat wiederum Einfluss auf die Frequenz, mit der das Düsenelement 30 schwingen kann. Vorzugsweise wird eine Resonanzfrequenz angestrebt, sodass das Düsenelement 30 mit der Erregerfrequenz schwingt.

Die Energie, die beim Zusammenfallen der Gasblasen frei wird, wird für die Auslösung der Schwingungsbewegung des Düsenelements 30 genutzt.

Die Schwingungsbewegung des Düsenelements 30 wird somit ausgelöst durch die Implosion der Gasblasen. Da erfindungsgemäß das Düsenelement 30 beweglich ausgeführt ist, wirkt die Schwingungsenergie des Düsenelements 30 hauptsächlich in zwei Richtungen parallel zur Mittelachse 5, nämlich in der Darstellung der Figur 2 nach links in Richtung der Hauptströmungsrichtung und zur Hauptströmungsrichtung entgegengesetzt, also nach rechts (vor und zurück). Durch diesen Vorgang wird der zeitliche Verlauf der Implosionsphase verändert. Da die Implosionsphase im Mikro- oder Millisekundenbereich abläuft, kann man diese Phase erfindungsgemäß beeinflussen. D.h. Das Verfahren muss vorzugsweise so geregelt werden, dass die Schwingung in Resonanz geht. Zu unterscheiden sind zwei Phasen:
a) Zeitliche Verkürzung der Implosionsphase: Die Verkürzung der Implosionsphase, welche eintritt, wenn sich das Düsenelement in Richtung der Hauptströmungsrichtung bewegt, bewirkt die Auslösung einer höheren Energie, die für eine Destrukturierung von Molekularstrukturen (Aufbrechen der vorhandenen chemischen Strukturen) genutzt wird. In dieser Phase wird die Schwingungsenergie für die höhere Wirkenergie genutzt.
b) Zeitliche Verlängerung der Implosionsphase: Die zeitliche Verlängerung der Implosionsphase, welche bei einer zur Hauptströmungsrichtung entgegengesetzten Bewegung des Düsenelements 30 auftritt, wird für die (Neu-) Strukturierung der Moleküle genutzt, da der Strukturierungsprozess eine längere zeitliche Phase benötigt.

Die Schwingung des Düsenelements 30 kann auch künstlich (mechanisch oder elektrisch) angeregt werden (anstelle durch die Kaviation).

Die Schwingungsamplitude des Düsenelements 30 kann so moduliert werden, dass in einem Teilreaktor die Molekularstrukturen gebrochen werden und in einem anderen Teilreaktor diese gebrochenen Molekularstrukturen neu strukturiert werden.

Zwischen der nadelförmigen Spitze 92 und dem Düsenelement 30 kann ein elektrisches Potenzial angelegt werden. Es kann dazu dienen, den Destrukturierungsprozess zu beschleunigen.

Im engeren Sinne nutzt die Erfindung die Kavitation, wenn überhaupt, nur für die Anregung des Düsenelements 30. Sobald die Soll-Frequenz erreicht ist und die chemische Reaktion eingeregelt ist, kann von einer Kavitation im Sinne einer ungeordneten Freisetzung von Energie nicht mehr die Rede sein. Vielmehr wird erfindungsgemäß die Freisetzung der Energie bei der Implosion der Gasblasen gezielt für die Umstrukturierung wenigstens eines Edukts genutzt.

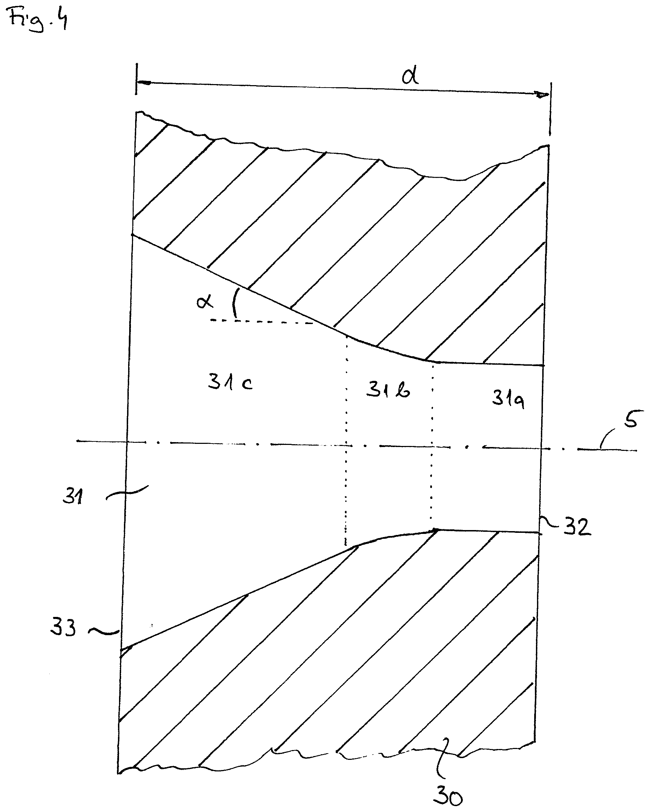

Figur 4 zeigt ein Ausführungsbeispiel für die Geometrie des Düsenkanals 31. Beginnend vom Einlass 31 weist der Düsenkanal 31 zunächst einen ersten Abschnitt 31a mit einem konstanten oder näherungsweise konstanten Strömungsquerschnitt auf, wobei ein Öffnungswinkel in diesem Abschnitt 0° bzw. 0° bis 5°beträgt. Dem ersten Abschnitt schließt sich ein zweiter Abschnitt 31b an, der auch als Übergangsabschnitt bezeichnet werden kann. In diesem Übergangsabschnitt findet der Übergang statt zwischen dem praktisch nicht vorhandenen Öffnungswinkel des ersten Abschnitts 31a und dem Öffnungswinkel α in einem dritten Abschnitt 31c. In diesem Ausführungsbeispiel beträgt der Öffnungswinkel α rund 25°. Im dritten Abschnitt 31c ist der Öffnungswinkel α über die Länge des Abschnitts 31c konstant. Es ist auch möglich, dass der Öffnungswinkel zum Auslass 33 hin immer größer wird.

In Figur 4 ist die Dicke des Düsenelements mit d bezeichnet. Die Länge des ersten Abschnitts 31 (parallel zur Mittelachse 5) kann 10 bis 50 % der Dicke d betragen, beispielsweise 2 mm bei einer Dicke d von 5 mm. Die Länge des zweiten Abschnitts 31 b kann 5 bis 30 % betragen. Die Länge des dritten Abschnitts 31c kann 20 bis 85 % der Dicke d betragen.

### Bezugszeichenliste

- 1: Reaktor
- 2: Vorkammer
- 3: Reaktionsraum
- 4: Ringraum
- 5: Mittelachse
- 10: Gehäuse
- 11: erstes Gehäuseteil
- 12: zweites Gehäuseteil
- 13: Eintrittskanal
- 14: Austrittskanal
- 15: Innenhülse
- 16: Außenhülse
- 17: Abführkanal
- 18: Austrittsöffnung
- 19: Befestigungsflansch
- 20: Gewindebohrung
- 21: erster Anschlag
- 22: Innengewinde
- 23: Innengewinde
- 30: Düsenelement
- 31: Bohrung/Düsenkanal
- 32: Einlass
- 33: Auslass
- 34: erste Grundfläche
- 35: zweite Grundfläche
- 36: Aufsatz
- 37: Befestigungsring
- 38: Rand
- 39: Gewindebohrung
- 40: Membran
- 41: innerer Bereich
- 42: äußerer Bereich
- 50: Stellvorrichtung
- 51: Stellglied
- 52: zweiter Anschlag
- 53: Außengewinde
- 54: Außenverzahnung
- 55: Zahnrad
- 60: Signalleitung
- 61: Signalleitung
- 62: Signalleitung
- 70: Kontrolleinheit
- 80: Sensoreinheit
- 90: Stellvorrichtung
- 91: Stellglied
- 92: nadelförmige Spitze
- 93: Kanal
- 94: außen Verzahnung
- 95: Zahnrad

## Patentansprüche

1. Reaktor (1) für eine chemische Reaktion, umfassend
- ein Gehäuse (10) und einen Reaktionsraum (3);
- ein Düsenelement (30) mit einem Einlass (32) zum Einströmen wenigstens eines Edukts in den Reaktionsraum (3), wobei das Düsenelement (30) relativ zum Gehäuse (10) beweglich gelagert ist;
- eine Sensorvorrichtung (80), durch die wenigstens eine Messgröße während der chemischen Reaktion erfassbar ist; und
- eine Stellvorrichtung (50), durch die wenigstens ein die Bewegung des Düsenelements (30) beeinflussender Lagerungsparameter einstellbar ist
- eine Kontrolleinheit (70), die ausgebildet ist, ein Messsignal der Sensorvorrichtung (80) auf Basis der Messgröße von der Sensorvorrichtung (80) zu empfangen und in Abhängigkeit des Messsignals ein Steuerungssignal für die Stellvorrichtung (50) zu erzeugen,
wobei die Sensorvorrichtung (80) einen Sensor zur Erfassung einer Frequenz aufweist, mit der das Düsenelement schwingt.

2. Reaktor (1) nach Anspruch 1, **dadurch gekennzeichnet, dass** ein erster Anschlag (21) und ein zweiten Anschlag (52) für das Düsenelement (30) vorgesehen sind, zwischen denen sich das Düsenelement (30) bewegen kann, wobei der einstellbare Lagerungsparameter ein Abstand zwischen dem ersten Anschlag (21) und dem zweiten Anschlag (52) ist.

3. Reaktor (1) nach Anspruch 2, **dadurch gekennzeichnet, dass** der Abstand sich parallel zu Hauptströmungsrichtung erstreckt, mit der das Edukt durch das Düsenelement (30) strömt.

4. Reaktor (1) nach einem der Ansprüche 1 bis 3, **dadurch gekennzeichnet, dass** das Düsenelement (30) einen Auslass (33) aufweist, wobei ein Strömungsquerschnitt des Auslasses (33) größer ist als ein Strömungsquerschnitt des Einlasses (32).

5. Reaktor (1) nach einem der der Ansprüche 1 bis 4, **dadurch gekennzeichnet, dass** das Düsenelement (30) als Scheibe mit einer zentralen Öffnung (31) ausgebildet ist.

6. Reaktor (1) nach einem der Ansprüche 1 bis 5, **dadurch gekennzeichnet, dass** das Düsenelement (30) über eine umlaufende Membran (40) an dem Gehäuse (10) befestigt ist.

7. Reaktor (1) nach einem der Ansprüche 1 bis 6, **dadurch gekennzeichnet, dass** ein Stellglied (91) mit einer nadelförmigen Spitze (92) vorgesehen ist, die vor dem Einlass (32) des Düsenelements 30) angeordnet ist bzw. durch den Einlass (32) des Düsenelements (30) greift.

8. Reaktor (1) nach Anspruch 7, **dadurch gekennzeichnet, dass** die Position der nadelförmigen Spitze (92) relativ zum Einlass (32) das Düsenelements (30) einstellbar ist.

9. Reaktor (1) nach Anspruch 7 oder 8, **dadurch gekennzeichnet, dass** die nadelförmige Spitze (92) einen Kanal (93) zur Zuführung des Edukts oder eines weiteren Edukts aufweist.

10. Reaktor (1) nach einem der Ansprüche 1 bis 9, **dadurch gekennzeichnet, dass** in der Nähe des Einlasses (32) des Düsenelements (30) Oberflächenstrukturen eingearbeitet sind.

11. Verfahren zur Regelung einer chemischen Reaktion, die in einem Reaktionsraum (3) eines Reaktors gemäß Anspruch 1 stattfindet, wobei der Reaktor (1) ein Gehäuse (10) und ein Düsenelement (30) umfasst, das relativ zum Gehäuse (10) beweglich gelagert ist und einen Einlass (32) zum Einströmen wenigstens eines Edukts in den Reaktionsraum (3) aufweist, wobei während der Reaktion das Düsenelement (30) eine schwingende Bewegung vollführt, wobei wenigstens ein Schwingungsparameter der schwingenden Bewegung erfasst wird, und wobei die Reaktion anhand des erfassten Schwingungsparameter geregelt wird.

12. Verfahren nach Anspruch 11, **dadurch gekennzeichnet, dass** der Schwingungsparameter eine Frequenz der schwingenden Bewegung des Düsenelements (30) ist.

13. Verfahren nach Anspruch 11 oder 12, **dadurch gekennzeichnet, dass** die schwingende Bewegung durch einen ersten Anschlag (21) für das Düsenelement (30) und einen zweiten Anschlag (52) für das Düsenelement begrenzt wird, wobei zur Regelung der Reaktion ein Abstand zwischen dem ersten Anschlag und dem zweiten Anschlag variiert wird.

14. Verfahren nach einem der Ansprüche 11 bis 13, **dadurch gekennzeichnet, dass** eine zum Einlass (32) des Düsenelements (30) relative Position einer nadelförmigen Spitze (92), die vor dem Einlass des Düsenelements angeordnet ist und/oder zumindest teilweise in den Einlass des Düsenelements hineinragt, zur Regelung der chemischen Reaktion verändert wird.

## Claims

1. Reactor (1) for a chemical reaction, comprising
- a housing (10) and a reaction chamber (3);
- a nozzle element (30) having an inlet (32) for the flow of at least one reactant into the reaction chamber (3), wherein the nozzle element (30) is mounted for movement relative to the housing (10);
- a sensor device (80), by means of which at least one measurement variable can be captured during the chemical reaction; and
- an actuating device (50), by means of which at least one mounting parameter influencing the movement of the nozzle element (30) can be set,
- a control unit (70), which is designed to receive a measurement signal of the sensor device (80) on the basis of the measurement variable from the sensor device (80) and to produce a control signal for the actuating device (50) in accordance with the measurement signal,
wherein the sensor device (80) has a sensor for capturing a frequency with which the nozzle element vibrates.

2. Reactor (1) according to claim 1, **characterised in that** a first stop (21) and a second stop (52) are provided for the nozzle element (30), between which the nozzle element (30) can move, wherein the mounting parameter which can be set is a distance between the first stop (21) and the second stop (52).

3. Reactor (1) according to claim 2, **characterised in that** the distance extends parallel to the main flow direction with which the reactant flows through the nozzle element (30).

4. Reactor (1) according to any one of claims 1 to 3, **characterised in that** the nozzle element (30) has an outlet (33), wherein a flow cross-section of the outlet (33) is larger than a flow cross-section of the inlet (32).

5. Reactor (1) according to any one of claims 1 to 4, **characterised in that** the nozzle element (30) is configured as a disc with a central opening (31).

6. Reactor (1) according to any one of claims 1 to 5, **characterised in that** the nozzle element (30) is fixed to the housing (10) via a circumferential membrane (40).

7. Reactor (1) according to any one of claims 1 to 6, **characterised in that** an actuator (91) is provided with a needle-shaped tip (92), which is arranged in front of the inlet (32) of the nozzle element (30) or engages through the inlet (32) of the nozzle element (30).

8. Reactor (1) according to claim 7, **characterised in that** the position of the needle-shaped tip (92) can be set relative to the inlet (32) the nozzle element (30).

9. Reactor (1) according to claim 7 or 8, **characterised in that** the needle-shaped tip (92) has a channel (93) for supplying the reactant or a further reactant.

10. Reactor (1) according to any one of claims 1 to 9, **characterised in that** surface structures are incorporated in the vicinity of the inlet (32) of the nozzle element (30).

11. Method for controlling a chemical reaction, which takes place in a reaction chamber (3) of a reactor according to claim 1, wherein the reactor (1) comprises a housing (10) und a nozzle element (30), which is mounted for movement relative to the housing (10) and has an inlet (32) for the flow of at least one reactant into the reaction chamber (3), wherein during the reaction the nozzle element (30) performs a vibrating movement, wherein at least one vibration parameter of the vibrating movement is captured and wherein the reaction is controlled by means of the captured vibration parameter.

12. Method according to claim 11, **characterised in that** the vibration parameter is a frequency of the vibrating movement of the nozzle element (30).

13. Method according to claim 11 or 12, **characterised in that** the vibrating movement is limited by a first stop (21) for the nozzle element (30) and a second stop (52) for the nozzle element, wherein a distance between the first stop and the second stop is varied for controlling the reaction.

14. Method according to any one of claims 11 bis 13, **characterised in that** a position of a needle-shaped tip (92) relative to the inlet (32) of the nozzle element (30), which tip is arranged in front of the inlet of the nozzle element and/or at least partially projects into the inlet of the nozzle element, is changed for controlling the chemical reaction.

## Revendications

1. Réacteur (1) pour une réaction chimique, comprenant
- un boîtier (10) et un espace réactionnel (3) ;
- un élément de buse (30) avec une entrée (32) pour introduire au moins un produit de départ dans l'espace réactionnel (3), dans lequel l'élément de buse (30) est monté de façon mobile par rapport au boîtier (10) ;
- un dispositif de capteur (80) au moyen duquel au moins une valeur de mesure peut être saisie pendant la réaction chimique ; et
- un dispositif de réglage (50) au moyen duquel au moins un paramètre de placement influant sur le mouvement de l'élément de buse (30) est réglable
- une unité de commande (70) qui est conçue pour recevoir un signal de mesure du dispositif de capteur (80) sur la base de la valeur de mesure du dispositif de capteur (80) et pour générer en fonction du signal de mesure, un signal de commande pour le dispositif de réglage (50),
dans lequel le dispositif de capteur (80) présente un capteur pour la saisie d'une fréquence à laquelle l'élément de buse oscille.

2. Réacteur (1) selon la revendication 1, **caractérisé en ce qu'**une première butée (21) et une seconde butée (52) pour l'élément de buse (30) sont prévues, entre lesquelles l'élément de buse (30) peut se déplacer, dans lequel le paramètre de placement réglable est un intervalle entre la première butée (21) et la seconde butée (52).

3. Réacteur (1) selon la revendication 2, **caractérisé en ce que** l'intervalle s'étend parallèlement à la direction d'écoulement principale selon laquelle le produit de départ s'écoule à travers l'élément de buse (30).

4. Réacteur (1) selon l'une quelconque des revendications 1 à 3, **caractérisé en ce que** l'élément de buse (30) présente une sortie (33), dans lequel une section d'écoulement de la sortie (33) est plus grande qu'une section d'écoulement de l'entrée (32).

5. Réacteur (1) selon l'une quelconque des revendications 1 à 4, **caractérisé en ce que** l'élément de buse (30) est conçu comme un disque avec une entrée centrale (31).

6. Réacteur (1) selon l'une quelconque des revendications 1 à 5, **caractérisé en ce que** l'élément de buse (30) est fixé au boîtier (10) par le biais d'une membrane périphérique (40).

7. Réacteur (1) selon l'une quelconque des revendications 1 à 6, **caractérisé en ce qu'**est prévu un actionneur (91) avec une pointe en forme d'aiguille (92) qui est disposée devant l'entrée (32) de l'élément de buse (30) ou est en prise à travers l'entrée (32) de l'élément de buse (30).

8. Réacteur (1) selon la revendication 7, **caractérisé en ce que** la position de la pointe en forme d'aiguille (92) est réglable par rapport à l'entrée (32) l'élément de buse (30).

9. Réacteur (1) selon la revendication 7 ou 8, **caractérisé en ce que** la position de la pointe en forme d'aiguille (92) présente un canal (93) pour acheminer le produit de départ ou un autre produit de départ.

10. Réacteur (1) selon l'une quelconque des revendications 1 à 9, **caractérisé en ce qu'**à proximité de l'entrée (32) de l'élément de buse (30), des structures de surface sont intégrées.

11. Procédé de régulation d'une réaction chimique qui a lieu dans un espace réactionnel (3) d'un réacteur selon la revendication 1, dans lequel le réacteur (1) comprend un boîtier (10) et un élément de buse (30) qui est monté de façon mobile par rapport au boîtier (10) et une entrée (32) pour introduire au moins un produit de départ dans l'espace réactionnel (3), dans lequel pendant la réaction, l'élément de buse (30) effectue un mouvement oscillant, dans lequel au moins un paramètre d'oscillation du mouvement oscillant est saisi, et dans lequel la réaction est régulée en s'appuyant sur le paramètre d'oscillation saisi.

12. Procédé selon la revendication 11, **caractérisé en ce que** le paramètre d'oscillation est une fréquence du mouvement oscillant de l'élément de buse (30).

13. Procédé selon la revendication 11 ou 12, **caractérisé en ce que** le mouvement oscillant est limité par une première butée (21) pour l'élément de buse (30) et une seconde butée (52) pour l'élément de buse, dans lequel pour la régulation de la réaction, un intervalle entre la première butée et la seconde butée varie.

14. Procédé selon l'une quelconque des revendications 11 à 13, **caractérisé en ce qu'**une position relative d'une pointe en forme d'aiguille (92) pour l'entée (32) de l'élément de buse (30), qui est disposée devant l'entrée de l'élément de buse et/ou dépasse au moins partiellement dans l'entrée de l'élément de buse, est modifiée pour la régulation de la réaction chimique.
